# EUROPEAN PATENT APPLICATION

(11) **EP 3 276 044 A1**
(43) Date of publication of application: **31.01.2018**
(21) Application number: 16845979.0
(22) Date of filing: 04.01.2016
(51) Int. Cl.: C23C 22/66

(54) **CHEMICAL CONVERSION SOLUTION FOR ALUMINUM OR ALUMINUM ALLOY, CHEMICAL CONVERSION METHOD, AND CHEMICAL CONVERSION FILM**

(30) Priority: 16.09.2015 JP 2015183128
(71) Applicant: Okuno Chemical Industries Co., Ltd., Osaka-shi Osaka 541-0045 (JP)
(72) Inventor: YASUDA, Toku, Osaka-shi Osaka 538-0044 (JP); IWASAKI, Yasunori, Osaka-shi Osaka 538-0044 (JP); HARA, Kenji, Osaka-shi Osaka 538-0044 (JP); KATAYAMA, Junichi, Osaka-shi Osaka 538-0044 (JP)
(74) Representative: Müller-Boré & Partner Patentanwälte PartG mbB
(86) International application number: PCT/JP2016/050011
(87) International publication number: WO 2017/047105

(57) **Abstract**

An object of the present invention is to provide a chemical conversion surface treatment solution that is capable of forming a chemical conversion film with excellent corrosion resistance and designability on articles having aluminum or aluminum alloy surfaces by using steps similar to those of known chemical conversion treatments without using hexavalent chromium, trivalent chromium, fluorine, or other components that create a significant burden on the environment. The present invention relates to a chemical conversion treatment solution for aluminum or aluminum alloys, comprising an alkaline aqueous solution containing a permanganic acid compound and at least one metal oxygen acid compound selected from the group consisting of vanadic acid compounds, molybdic acid compounds, tungstic acid compounds, zirconic acid compounds, and niobic acid compounds.

## Description

### Technical Field

The present invention relates to a chemical conversion treatment solution for aluminum or aluminum alloys, a chemical conversion treatment method, and a chemical conversion film.

### Background Art

Aluminum-based metal materials (in particular, A2024 and the like, i.e., low-corrosion resistant alloy-type aluminum containing a relatively large amount of copper) are subjected to chemical conversion treatment, by which a metal compound film is formed on their surface, to improve the corrosion resistance or rust prevention property.

Examples of general chemical conversion treatments include hexavalent chromium chemical conversion treatment and trivalent chromium chemical conversion treatment. A film obtained by hexavalent chromium chemical conversion treatment exhibits a gold color tone, as well as excellent designability. However, a hexavalent chromium chemical conversion treatment solution contains environmentally harmful components, such as hexavalent chromium and fluorine, creating a significant burden on the environment. A trivalent chromium chemical conversion treatment, which uses trivalent chromium, creates a reduced burden on the environment, compared with the hexavalent chromium chemical conversion treatment, which uses hexavalent chromium. Although a film obtained by a trivalent chromium chemical conversion treatment achieves sufficient corrosion resistance, the gold color tone cannot be obtained, unlike the film obtained by hexavalent chromium chemical conversion treatment, and this failure to obtain the gold color tone results in insufficient designability.

In recent years, chromium-free chemical conversion treatments, which do not use chromium, have been developed (see Patent Literature (PTL) 1 and Patent Literature (PTL) 2 below). PTL 1 discloses immersing low-corrosion resistant alloy-type aluminum containing copper, such as A2024 or A7075, in boiling water for 5 minutes; immersing, as a sealing treatment, the resulting product in an aqueous permanganic acid solution at about 80°C for 2 minutes; further immersing the resulting product in an aqueous potassium silicate solution at about 80°C for 2 minutes; and further immersing the resulting product in a lithium nitrate-containing saturated lime water at about 80°C for 2 minutes. In this manner, in PTL 1, a highly corrosion-resistant film with a color tone similar to that obtained by hexavalent chromium chemical conversion treatment is obtained. However, the method disclosed in PTL 1 involves an extremely large number of treatment steps, and a series of the treatment takes a long time, posing a problem for industrial operability or productivity. PTL 2 discloses immersing a 4000-series aluminum alloy in an aqueous solution having a pH of 6 to 11 and comprising permanganate ions and lithium ions, or in an aqueous solution having a pH of 12 to 13 and comprising permanganate ions and silicate ions. In this manner, in PTL 2, corrosion resistance comparable to or more excellent than that of a film obtained by a hexavalent chromium chemical conversion treatment is obtained. However, PTL 2 nowhere discloses the color tone of the formed chemical conversion film, or an effect achieved on low-corrosion resistant alloy-type aluminum.

Accordingly, although the chromium-free chemical conversion treatment can further reduce the burden on the environment, it is difficult to form a film in gold color with sufficient corrosion resistance by using a simple method as in a known hexavalent chromium chemical conversion treatment.

### Citation List

### Patent Literature

PTL 1: JPS63-62885A
PTL 2: JP2000-297382A

### Summary of Invention

### Technical Problem

In view of the above circumstances, a problem to be solved by the present invention is to provide a chemical conversion surface treatment solution that is capable of forming a chemical conversion film with excellent corrosion resistance and designability on articles having aluminum or aluminum alloy surfaces by using steps similar to those of a known chemical conversion treatment without using hexavalent chromium, trivalent chromium, fluorine, or other components that create a significant burden on the environment.

### Solution to Problem

The present inventors conducted extensive research to develop a chemical conversion treatment solution that is capable of easily forming a chemical conversion film with excellent corrosion resistance and designability on articles having aluminum or aluminum alloy surfaces. As a result, the inventors found that it is possible to solve the above problem by subjecting an aluminum-based metal material to a surface treatment using an alkaline aqueous solution containing permanganate and a specific metal oxygen acid salt. The present invention has been accomplished, based on such findings.

More specifically, the present invention relates to a chemical conversion treatment solution for aluminum or aluminum alloys, a chemical conversion treatment method, and a chemical conversion film, as shown in the following Items 1 to 7.
1. A chemical conversion treatment solution for aluminum or aluminum alloys, comprising an alkaline aqueous solution containing a permanganic acid compound and at least one metal oxygen acid compound selected from the group consisting of vanadic acid compounds, molybdic acid compounds, tungstic acid compounds, zirconic acid compounds, and niobic acid compounds.
2. The chemical conversion treatment solution according to Item 1, wherein the metal oxygen acid compound is a vanadic acid compound.
3. The chemical conversion treatment solution according to Item 2, wherein the vanadic acid compound is sodium metavanadate.
4. The chemical conversion treatment solution according to any one of Items 1 to 3, having a pH of 8.5 to 12.5.
5. The chemical conversion treatment solution according to any one of Items 1 to 4, comprising the permanganic acid compound in an amount of 0.05 to 10 g/L on a manganese amount basis, and the metal oxygen acid compound in an amount of 0.05 to 10 g/L on a total metal amount basis.
6. A chemical conversion treatment method comprising bringing a target material having an aluminum or aluminum alloy portion to be subjected to a chemical conversion treatment into contact with the chemical conversion treatment solution of any one of Items 1 to 5.
7. A chemical conversion film formed by the chemical conversion treatment method of Item 6, the film having an L* value of 50 or more, an a* value of -10 to 10, and a b* value of 20 or more, as measured in accordance with the L*a*b* color system.

### Advantageous Effects of Invention

The chemical conversion treatment solution of the present invention is capable of forming a chemical conversion film in gold color with excellent corrosion resistance and designability on various target materials having aluminum or aluminum alloy surfaces by using steps similar to those of a known chemical conversion treatment. The chemical conversion treatment solution of the present invention is capable of forming a chemical conversion film in gold color with excellent corrosion resistance and designability even on, in particular, a low-corrosion resistant aluminum alloy containing, for example, copper; thus, the chemical conversion treatment solution of the present invention is useful for improving the corrosion resistance or rust prevention property of a target material having a surface formed of a low-corrosion-resistant aluminum alloy. The chemical conversion treatment solution of the present invention, which does not contain hexavalent chromium, trivalent chromium, fluorine, and other harmful components, is highly safe.

The chemical conversion treatment method of the present invention is capable of forming a chemical conversion film in gold color with excellent corrosion resistance and designability on various target materials having aluminum or aluminum alloy surfaces by using steps similar to those of a known conventional chemical conversion treatment method. Further, the wastewater from the chemical conversion treatment method of the present invention causes far less pollution, compared with known chemical conversion treatments that use hexavalent chromate; thus, the chemical conversion treatment method of the present invention is advantageous in terms of environmental pollution.

### Description of Embodiments

The following describes the chemical conversion treatment solution for aluminum or aluminum alloys (hereinafter, sometimes simply referred to as "the chemical conversion treatment solution"), chemical conversion treatment method, and chemical conversion film of the present invention.

### Chemical Conversion Treatment Solution

The chemical conversion treatment solution for aluminum or aluminum alloys of the present invention is an alkaline aqueous solution containing a permanganic acid compound and at least one metal oxygen acid compound selected from the group consisting of vanadic acid compounds, molybdic acid compounds, tungstic acid compounds, zirconic acid compounds, and niobic acid compounds. In the chemical conversion treatment solution of the present invention, a permanganic acid compound is used in combination with at least one metal oxygen acid compound selected from the group consisting of vanadic acid compounds, molybdic acid compounds, tungstic acid compounds, zirconic acid compounds, and niobic acid compounds, and the aqueous solution is made alkaline. This makes it possible to form a chemical conversion film in gold color with excellent corrosion resistance.

The chemical conversion treatment solution of the present invention contains a permanganic acid compound as an essential component.

The permanganic acid compound is not limited as long as it is a water-soluble permanganic acid or a salt thereof. Examples of the permanganic acid compound include permanganic acid, potassium permanganate, sodium permanganate, ammonium permanganate, magnesium permanganate, calcium permanganate, and the like. These permanganic acid compounds may be used alone or in a combination of two or more. The permanganic acid compound is preferably sodium permanganate.

The permanganic acid compound is an oxygen acid containing heptavalent manganese, and is usually present in an aqueous solution as permanganate ions, a part of which may be reduced to be present as manganate(VI) ions (MnO₄²⁻) containing hexavalent manganese.

The content of the permanganic acid compound may be usually about 0.05 to 10 g/L, and preferably about 0.35 to 5 g/L, on a manganese amount basis.

The chemical conversion treatment solution of the present invention contains, as an essential component, at least one metal oxygen acid compound selected from the group consisting of vanadic acid compounds, molybdic acid compounds, tungstic acid compounds, zirconic acid compounds, and niobic acid compounds.

The vanadic acid compound is not particularly limited, as long as it is a water-soluble vanadic acid or a salt thereof. Examples of the vanadic acid compound include vanadic acid, which is an oxygen acid containing pentavalent vanadium, salts thereof, and the like. Specific examples thereof include metavanadic acid (HVO₃), sodium metavanadate (NaVO₃), potassium vanadate (KVO₃), ammonium metavanadate (NH₄VO₃), sodium orthovanadate (Na₃VO₄), potassium orthovanadate (K₃VO₄), sodium pyrovanadate (Na₄V₂O₇), potassium pyrovanadate (K₄V₂O₇), and the like. These vanadic acid compounds may be used alone or in a combination of two or more. The vanadic acid compound is preferably sodium metavanadate.

The molybdic acid compound is not particularly limited as long as it is a water-soluble molybdic acid or a salt thereof. Examples of the molybdic acid compound include molybdic acid, which is an oxygen acid containing hexavalent molybdenum, salts thereof, and the like. Specific examples thereof include sodium molybdate (Na₂MoO₄), potassium molybdate (K₂MoO₄), ammonium molybdate ((NH₄)₆Mo₇O₂₄•4H₂O), calcium molybdate (CaMoO₄), phosphomolybdic acid (H₃PMo₁₂O₄₀), and the like. These molybdic acid compounds may be used alone or in a combination of two or more. The molybdic acid compound is preferably sodium molybdate.

The tungstic acid compound is not particularly limited as long as it is a water-soluble tungstic acid or a salt thereof. Examples of the tungstic acid compound include tungstic acid, which is an oxygen acid containing hexavalent tungsten, salts thereof, and the like. Specific examples thereof include sodium tungstate (Na₂WO₄), potassium tungstate (K₂WO₄), ammonium tungstate ((NH₄)₂WO₄), sodium paratungstate (Na₁₀[W₁₂O₄₆H₁₀]), ammonium paratungstate ((NH₄)₁₀[W₁₂O₄₆H₁₀]), potassium metatungstate (K₆[H₂W₁₂O₄₀]), phosphotungstic acid (H₃PW₁₂O₄₀•nH₂O), and the like. These tungstic acid compounds may be used alone or in a combination of two or more. The tungstic acid compound is preferably sodium tungstate.

The zirconic acid compound is not particularly limited as long as it is a water-soluble zirconic acid or a salt thereof. Examples of the zirconic acid compound include zirconic acid, which is an oxygen acid containing tetravalent zirconium, salts thereof, and the like. Specific examples thereof include sodium zirconate (Na₂ZrO₃), potassium zirconate (K₂ZrO₃), calcium zirconate (CaZrO₃), and the like. These zirconic acid compounds may be used alone or in a combination of two or more. The zirconic acid compound is preferably calcium zirconate.

The niobic acid compound is not particularly limited as long as it is a water-soluble niobic acid or a salt thereof. Examples of the niobic acid compound include niobic acid, which is an oxygen acid containing pentavalent niobium, salts thereof, and the like. Specific examples thereof include sodium niobate (NaNbO₃), potassium niobate (KNbO₃), and the like. These niobic acid compounds may be used alone or in a combination of two or more. The niobic acid compound is preferably sodium niobate.

The above metal oxygen acid compounds may be used alone or in a combination of two or more. Of the above metal oxygen acid compounds, a vanadic acid compound is preferable, and sodium metavanadate is more preferable.

The content of the metal oxygen acid compound is usually about 0.05 to 10 g/L, preferably about 0.35 to 5 g/L, and more preferably about 1.5 to 5 g/L, on a total metal amount basis. Here, the content of the metal oxygen acid compound refers to its metal amount when a single type of metal oxygen acid compound is used, and refers to a total amount of metals when two or more types of metal oxygen acid compounds are used.

The chemical conversion treatment solution of the present invention must be made alkaline. When the solution is made alkaline, permanganate ions and metal oxygen acid ions are stabilized. The chemical conversion treatment solution preferably has a pH of 7.5 or higher, and more preferably about 8.5 to 12.5.

The chemical conversion treatment solution of the present invention may optionally contain a pH adjuster. The pH adjuster is not particularly limited, and various known pH adjusters may be used. Examples of the pH adjuster include bases, such as sodium hydroxide, potassium hydroxide, and aqueous ammonia; inorganic acids, such as hydrochloric acid and sulfuric acid; organic acids, such as citric acid, lactic acid, acetic acid, and succinic acid; and the like.

The chemical conversion treatment solution of the present invention may further optionally contain a pH buffer to suppress pH changes and to stably perform a chemical conversion treatment. The pH buffer is not particularly limited, and various known pH buffers may be used. Examples of the pH buffer include carbonate-based buffers, such as sodium carbonate, potassium carbonate, calcium carbonate, magnesium carbonate, sodium hydrogen carbonate, and potassium hydrogen carbonate; phosphate-based buffers, such as disodium hydrogen phosphate, sodium dihydrogen phosphate, dipotassium hydrogen phosphate, and potassium dihydrogen phosphate; acetate-based buffers, such as acetic acid and sodium acetate; sodium tetraborate; and the like.

According to the chemical conversion treatment solution of the present invention, a chemical conversion film in gold color with excellent corrosion resistance and designability is formed on various target materials having aluminum or aluminum alloy surfaces by using steps similar to those of known chemical conversion treatments. The chemical conversion treatment solution of the present invention is capable of forming a chemical conversion film in gold color with excellent corrosion resistance and designability even on, in particular, a low-corrosion-resistant aluminum alloy containing, for example, copper, and is thus useful for improving the corrosion resistance or rust prevention property of a target material having a surface formed of a low-corrosion-resistant aluminum alloy. The chemical conversion treatment solution of the present invention, which does not contain hexavalent chromium, trivalent chromium, fluorine, or other harmful components, is highly safe.

### Chemical Conversion Treatment Method

The treatment method using the chemical conversion treatment solution of the present invention is not particularly limited. It is sufficient if the chemical conversion treatment solution is brought into contact with a target surface of a target material. Examples of specific treatment methods include a method comprising immersing a target material into the chemical conversion treatment solution; a method of spraying the chemical conversion treatment solution onto a target material; and the like.

When a target material is immersed into the chemical conversion treatment solution, for example, the bath temperature may be adjusted to be within a range of about 20 to 80°C, and the immersion time may be adjusted to be within a range of about 10 seconds to 10 minutes. The specific treatment temperature and treatment time are arbitrarily determined according to the type and concentration of active ingredient, the pH of the treatment solution, and the like.

The target material may be optionally subjected to pretreatment, such as washing and activation, prior to the chemical conversion treatment using the chemical conversion treatment solution of the present invention. The washing may be performed in accordance with a known method, and, if necessary, electrolytic degreasing or the like may also be applied.

The target material to be treated by the chemical conversion treatment method of the present invention is an article having an aluminum or aluminum alloy surface portion as a portion to be treated. In addition to, for example, various articles obtained by using aluminum or an aluminum alloy as their materials, it is possible to use articles obtained by forming an aluminum plating or aluminum alloy plating film on various base materials, such as a steel sheet; articles obtained by molten aluminum plating; and the like. The aluminum alloy is not particularly limited, and various alloys containing aluminum as a primary metal component may be used. For example, the target material may be A1000-series pure aluminum, A2000-series aluminum alloys containing copper and manganese, A3000-series aluminum-manganese alloys, A4000-series aluminum-silicon alloys, A5000-series aluminum-magnesium alloys, A6000-series aluminum-magnesium-silicon alloys, A6000-series aluminum-zinc-magnesium alloys, and the like.

When the chemical conversion treatment is performed using the chemical conversion treatment solution of the present invention, a chemical conversion film in gold color similar to that obtained by a hexavalent chromium chemical conversion treatment is formed on a surface of the target material. The chemical conversion treatment method of the present invention is capable of forming a chemical conversion film in gold color with excellent corrosion resistance by using steps similar to those of a hexavalent chromium chemical conversion treatment without performing a large number of treatment steps. These chemical conversion films impart excellent corrosion resistance to the aluminum or aluminum alloy of the target material.

After the chemical conversion treatment is performed using the chemical conversion treatment solution of the present invention, an overcoat consisting of an inorganic film or an organic film may further optionally be formed. This further improves the corrosion resistance. Examples of the inorganic film include films of colloidal silica, silicate compound, and the like. Examples of the organic film include films of acrylic resin, epoxy resin, urethane resin, polyester resin, polyolefin resin, styrene resin, phenolic resin, and the like. The overcoat may be formed in accordance with a known method. For example, coating, spraying, and dipping, may be used. The thickness of the overcoat is not particularly limited, and may be, for example, about 0.1 to 30 µm.

As described above, the chemical conversion treatment method of the present invention is capable of forming a chemical conversion film in gold color with excellent corrosion resistance and designability on various target materials having aluminum or aluminum alloy surfaces by using steps similar to those of known conventional chemical conversion treatment methods. Further, the wastewater of the chemical conversion treatment method of the present invention causes far less pollution, compared with known chemical conversion treatments that use hexavalent chromate; thus, the chemical conversion treatment method of the present invention is advantageous in terms of environmental pollution.

### Chemical Conversion Film

It is preferable that the chemical conversion film formed by the chemical conversion treatment method above have a gold color, and that it have an L* value of 50 or more, an a* value of -10 to 10, and a b* value of 20 or more, as measured in accordance with the L*a*b* color system.

L* values, measured in accordance with the L*a*b* color system, represent the "lightness" of a sample. The value of L* is based on the percentage of light reflectance on a scale of 0 to 100. If the L* value is 0, the sample is black, and if the L* value is 100, the sample is white. a* values represent how green to red a sample is on a -60 to 60 scale with -60 being green and 60 being red. b* values represent how blue to yellow a sample is on a scale of -60 to 60 with -60 being blue and 60 being yellow.

### Examples

The present invention is described in detail below, with reference to Examples and Comparative Examples. However, the present invention is not limited to the following Examples.

### Example 1

An A1050 plate (size: 0.5 x 50 x 100 mm) was used as a target material (test sample), and subjected to the following pretreatment.

An alkaline-degreasing agent "TOP ALCLEAN 101" (product name, produced by Okuno Chemical Industries Co., Ltd.) (3.0 mass%) was heated to 55°C, in which the test sample was immersed for 1 minute to perform degreasing treatment, followed by washing with water for 30 seconds. When required, an aqueous sodium hydroxide solution (7.0 mass%) was heated to 55°C, in which the test sample was immersed for 1 minute to perform etching treatment, followed by washing with water for 30 seconds. Subsequently, the test sample was immersed in a desmutting agent "Top Desmut N-20" (product name, produced by Okuno Chemical Industries Co., Ltd.) (10.0 mass%) for about 30 to 60 seconds to perform desmutting, followed by washing with water for 30 seconds.

Separately, sodium metavanadate (1 g/L) was added to deionized water warmed to a temperature of about 50°C while stirring, followed by mixing. Then, sodium permanganate (5.4 g/L) dissolved in deionized water was added to the resulting mixture and mixed. Finally, manganese ions were adjusted to 2 g/L, vanadium ions to 0.4 g/L, and the pH to 10.5, to thus obtain the chemical conversion treatment solution of Example 1.

The thus pretreated aluminum test sample was immersed in the chemical conversion treatment solution of Example 1 at 55°C for 5 minutes to form a chemical conversion film.

The film appearance and corrosion resistance of the test sample after chemical conversion treatment was evaluated according to the following method. The stability of the bath used (chemical conversion treatment solution) was also evaluated according to the following method. Table 1 shows the results.

### Examples 2 to 20 and Comparative Examples 1 to 8

Chemical conversion treatment solutions containing the components shown in Tables 1 to 4 were prepared, and chemical conversion treatment was performed under the conditions shown in Tables 1 to 4 using the test samples shown in Tables 1 to 4, which had been pretreated as in Example 1. The film appearance and corrosion resistance of each test sample after chemical conversion treatment was evaluated according to the following method. The stability of the bath was also evaluated according to the following method. Tables 1 to 4 show the results.

### - Bath Stability

After each chemical conversion treatment solution was prepared, the bath was left to stand for 30 days, and the state of the chemical conversion treatment solution was observed and evaluated according to the following criteria.
A: No aggregate or precipitate was generated
C: Aggregates or precipitates were generated

### - Film Appearance

The color tone of the formed chemical conversion films was visually observed and evaluated based on L*a*b* values. The L*a*b* values were measured using a spectrophotometer CA-3700A (produced by Konica Minolta Co., Ltd.), and evaluated according to the following criteria.
A: applicable to all of the following: L* value was 50 or more; a* value was -10 to 10; b* value was 20 or more
C: not applicable to all of the following: L* value was 50 or more; a* value was -10 to 10; b* value was 20 or more

### - Corrosion Resistance

A neutral salt spray test (SST) was performed in accordance with JIS Z 2371, and the corrosion resistance after 168 hours was evaluated. The evaluation criteria were set as follows, based on "the relation between the corrosion area ratio and the rating number" of JIS Z 2371.
A: the corrosion area ratio: 0.10% or less (rating number: 9 or greater)
B: the corrosion area ratio: more than 0.10% and 1.00% or less (rating number: 8 to 6)
C: the corrosion area ratio: more than 1.00% (rating number: 5 or less)

**Table 1**

| | Example 1 | Example 2 | Example 3 | Example 4 | Example 5 | Example 6 | Example 7 | Comp. Ex. 1 |
|---|---|---|---|---|---|---|---|---|
| Target material | A1050 | A6061 | A2024 | A2024 | A2024 | A2024 | A2024 | A2024 |
| Sodium permanganate (g/L) | 5.4 | 5.4 | 5.4 | 2.7 | 10.8 | 5.4 | 5.4 | 5.4 |
| Sodium metavanadate (g/L) | 1 | 1 | 1 | 1 | 1 | 0.5 | 5 | None |
| Treatment pH | 10.5 | 10.5 | 10.5 | 10.5 | 10.5 | 10.5 | 10.5 | 10.5 |
| Treatment temperature(°C) | 55 | 55 | 55 | 55 | 55 | 55 | 55 | 55 |
| Treatment time (min) | 5 | 5 | 5 | 5 | 5 | 5 | 5 | 5 |
| Bath stability | A | A | A | A | A | A | A | A |
| Film appearance | Gold | Gold | Gold | Gold | Gold | Gold | Gold | Gold |
| L*a*b* | A | A | A | A | A | A | A | A |
| L* | 76.56 | 71.67 | 74.62 | 72.21 | 73.62 | 75.85 | 71.28 | 72.68 |
| a* | 2.76 | 3.57 | 2.84 | 3.95 | 2.47 | 2.15 | 2.69 | 2.7 |
| b* | 35.19 | 32.19 | 33.46 | 33.25 | 31.47 | 37.54 | 33.67 | 31.25 |
| Corrosion resistance (SST 168 h) | A | A | A | A | A | A | A | B |

**Table 2**

| | Example 8 | Example 9 | Example 10 | Example 11 | Example 12 | Example 13 | Example 14 | Example 15 | Example 16 | Comp. Ex. 2 | Comp. Ex. 3 | Comp. Ex. 4 |
|---|---|---|---|---|---|---|---|---|---|---|---|---|
| Target material | A2024 | A2024 | A2024 | A2024 | A2024 | A2024 ' | A2024 | A2024 | A2024 | A2024 | A2024 | A2024 |
| Sodium permanganate (g/L) | 5.4 | 5.4 | 5.4 | 5.4 | 5.4 | 5.4 | 5.4 | 5.4 | 5.4 | 5.4 | 5.4 | 5.4 |
| Sodium metavanadate (g/L) | 1 | 1 | 1 | 1 | 1 | 1 | 1 | 1 | 1 | 1 | 1 | 1 |
| Treatment pH | 9.5 | 11.5 | 12.6 | 10.5 | 10.5 | 10.5 | 10.5 | 10.5 | 10.5 | 3.4 | 3.5 | 6.5 |
| Treatment temperature(°C) | 55 | 55 | 55 | 40 | 60 | 70 | 80 | 55 | 55 | 55 | 55 | 55 |
| Treatment time (min) | 5 | 5 | 5 | 5 | 5 | 5 | 5 | 4 | 6 | 5 | 5 | 5 |
| Bath stability | A | A | A | A | A | A | A | A | A | C | C | C |
| Film appearance | Gold | Gold | Gold to gray | Gold | Gold | Gold | Gold | Gold | Gold | Gold | Colorless | Colorless |
| L*a*b* | A | A | A | A | A | A | A | A | A | A | C | C |
| L* | 77.15 | 76.65 | 68.75 | 70.25 | 77.36 | 75.41 | 79.54 | 74.55 | 73.46 | 70.25 | 89.75 | 87.93 |
| a* | 3.16 | 3.78 | 4.51 | 2.45 | 2.69 | 2.33 | 3.51 | 3.62 | 3.17 | 4.13 | 0.34 | 0.25 |
| b* | 31.54 | 30.89 | 31.57 | 32.41 | 34.32 | 31.68 | 32.79 | 31.41 | 35.76 | 30.82 | 4.8 | 6.8 |
| Corrosion resistance (SST 168 h) | A | A | A | A | A | A | A | A | A | B | C | C |

**Table 3**

| | Example 17 | Example 18 | Example 19 | Example 20 | Comp. Ex. 5 | Comp. Ex. 6 |
|---|---|---|---|---|---|---|
| Target material | A2024 | A2024 | A2024 | A2024 | A2024 | A2024 |
| Sodium permanganate (g/L) | 5.4 | 5.4 | 5.4 | 5.4 | 5.4 | 5.4 |
| Sodium molybdate (g/L) | 1 | | | | | |
| Sodium tungstate (g/L) | | 1 | | | | |
| Calcium zirconate (g/L) | | | 1 | | | |
| Sodium niobate (g/L) | | | | 1 | | |
| Vanadium dioxide (g/L) | | | | | 1 | |
| Zirconyl nitrate• dihydrate (g/L) | | | | | | 1 |
| Treatment pH | 10.5 | 10.5 | 10.5 | 10.5 | 10.5 | 10.5 |
| Treatment temperature(°C) | 55 | 55 | 55 | 55 | 55 | 55 |
| Treatment time (min) | 5 | 5 | 5 | 5 | 5 | 5 |
| Bath stability | A | A | A | A | A | A |
| Film appearance | Gold | Gold | Gold | Gold | Gray | Gray |
| L*a*b* | A | A | A | A | A | A |
| L* | 71.17 | 74.58 | 73.96 | 75.84 | 68.29 | 68.65 |
| a* | 2.87 | 2.58 | 2.21 | 2.41 | 4.21 | 3.74 |
| b* | 32.41 | 32.63 | 33.1 | 33.81 | 29.25 | 30.92 |
| Corrosion resistance (SST 168 h) | A | A | A | A | B | B |

**Table 4**

| | Comp. Ex. 7 | Comp. Ex. 8 |
|---|---|---|
| Target material | A6061 | A2024 |
| Chromic acid (g/L) | 10 | 10 |
| Ferricyanide complex (g/L) | 6 | 6 |
| Acidic sodium fluoride (g/L) | 4 | 4 |
| Treatment pH | 2.0 | 2.0 |
| Treatment temperature (°C) | 25 | 25 |
| Treatment time (min) | 1 | 1 |
| Bath stability | A | A |
| Film appearance | Gold | Gold |
| L*a*b* | A | A |
| L* | 69.61 | 67.53 |
| a* | 5.21 | 5.87 |
| b* | 35.07 | 35.57 |
| Corrosion resistance (SST 168 h) | A | A |

The results shown in Tables 1 to 4 reveal that the use of the chemical conversion treatment solutions of Examples 1 to 20, which are alkaline aqueous solutions containing a permanganic acid compound, and a metal oxygen acid compound selected from the group consisting of vanadic acid compounds, molybdic acid compounds, tungstic acid compounds, zirconic acid compounds, and niobic acid compounds is capable of forming, on a target material formed of aluminum or an aluminum alloy, a chemical conversion film in gold color with designability and corrosion resistance comparable to those obtained when known hexavalent chromium chemical conversion treatment solutions (Comparative Examples 7 and 8) were used.

The above results confirm that immersion of an aluminum-based metal material in an alkaline aqueous solution containing a permanganic acid compound and a specific metal oxygen acid compound makes it possible to efficiently obtain a chemical conversion film with excellent corrosion resistance and designability. This indicates that the chemical conversion treatment method of the present invention greatly reduces the burden on the environment, compared with known chemical conversion treatments that use chromate, and that the chemical conversion treatment method of the present invention can be performed in a manner similar to that of known chemical conversion treatments.

## Claims

1. A chemical conversion treatment solution for aluminum or aluminum alloys, comprising an alkaline aqueous solution containing a permanganic acid compound and at least one metal oxygen acid compound selected from the group consisting of vanadic acid compounds, molybdic acid compounds, tungstic acid compounds, zirconic acid compounds, and niobic acid compounds.

2. The chemical conversion treatment solution according to claim 1, wherein the metal oxygen acid compound is a vanadic acid compound.

3. The chemical conversion treatment solution according to claim 2, wherein the vanadic acid compound is sodium metavanadate.

4. The chemical conversion treatment solution according to any one of claims 1 to 3, having a pH of 8.5 to 12.5.

5. The chemical conversion treatment solution according to any one of claims 1 to 4, comprising the permanganic acid compound in an amount of 0.05 to 10 g/L on a manganese amount basis, and the metal oxygen acid compound in an amount of 0.05 to 10 g/L on a total metal amount basis.

6. A chemical conversion treatment method comprising bringing a target material having an aluminum or aluminum alloy portion to be subjected to a chemical conversion treatment into contact with the chemical conversion treatment solution of any one of claims 1 to 5.

7. A chemical conversion film formed by the chemical conversion treatment method of claim 6, the film having an L* value of 50 or more, an a* value of -10 to 10, and a b* value of 20 or more, as measured in accordance with the L*a*b* color system.
